# EUROPEAN PATENT SPECIFICATION

(11) **EP 3 209 921 B1**
(45) Date of publication and mention of the grant of the patent: **04.09.2019**
(21) Application number: 15791153.8
(22) Date of filing: 23.10.2015
(51) Int. Cl.: F25B 41/06, F42B 3/00, F25B 49/00, F16L 41/06, F16K 17/40, B60H 1/00, B23D 15/14

(54) **TUBE CUTTER**
ROHRSCHNEIDER
TRANCHEUR DE TUYAUX

(30) Priority: 24.10.2014 US 201462068304 P
(43) Date of publication of application: 30.08.2017
(73) Proprietor: Key Safety Systems, Inc., Sterling Heights, MI 48314 (US)
(72) Inventor: MCLEOD II, William F., Riverview, Florida 33578 (US); WARLICK, Malcolm, Lawrenceville, GEORGIA 30043 (US); VOLKMANN, Matthias, 61476 Kronberg (DE); PIERUCH, Martin, 65239 Hochheim (DE); REA, Sergio, I-00034 Colleferro (IT)
(74) Representative: Gislon, Gabriele
(86) International application number: PCT/US2015/057159
(87) International publication number: WO 2016/065286

(56) References cited:
- EP-A1- 2 020 548
- EP-A1- 2 522 895

## Description

### Field of the Invention

The present invention relates to a device configured to open a fluid carrying line in the event of emergency. More particularly, the device can be used to open a refrigerant line of a vehicle in the event of an accident to vent the refrigerant external of the passenger compartment.

### Background of the Invention

European regulations are requiring changes to refrigeration technology. Refrigeration systems using fluorocarbon media are known to have consequential impact to the environment. This has moved industry in the direction of solutions with lower environmental impact. A leading candidate is using carbon dioxide CO2 as a refrigerant. While CO2 has the lowest impact to the environment it has technical concerns which must be considered. Operating pressures will be approximately 10 times higher than traditional A/C systems. In the event of a vehicle crash, if the compressed CO2 were to release into an unvented passenger compartment, oxygen could be displaced to form a potentially toxic environment to the occupants.

A relief valve for use with a conduit is disclosed in EP2020548. The valve includes a housing attached to the conduit and an engagement member slidably disposed within the housing. The conduit is matingly received between the first half and the second half of the housing and is received a first bore of the housing. An engagement element is slidably received within said first bore of the arm portion of the housing and includes a first end, a central portion and a second end. The second end is received within the cavity of the initiator. The central portion has an outer diameter larger than that of said first and second portions and said diameter is equal to the inner diameter of arm portion of the housing. When the engagement member moves from a retracted position to an extended position, it pierces the conduit and fluid disposed within the conduit is vented through the vent hole provided in fluid communication with said bore.

EP 2522895A1 discloses a device for drawing a tank of fluid under pressure pertaining to a space system. The device includes a collar, enclosing conduit in fluid communication with the tank. The collar includes a pyrotechnic cartridge for perforation of said conduit and an anvil diametrically opposed to said cartridge to collect debris generated by the perforation. The pyrotechnic cartridge includes a metallic envelop closed at one end by a wall, detonator and an explosive material. The cartridge is closed by a concave cap. When the detonator receives a signal, the explosive material detonates and projects the cap in the direction of the conduit; the cap is transformed into a projectile that crosses through the conduit and is stopped by the anvil within the collar. The fluid can escape through the perforations and the exhaust ports.

Venting refrigerant cooling systems has been used in fire suppression situations. In US 5934379, the use of an opening valve is disclosed in conjunction with a container filled with CO2. Other devices as shown in US 7373944 incorporated into the pressurized lines employ a rupture disk and the valve is incorporated into an open end of a line branch and is sealed by the disk. On activation, the disk is ruptured and the open line vents through the relief valve. The line is never cut or pierced. These devices are considered invasive as they require the valve to be incorporated into and be a part of a fluid carrying line or tube and the housing body is also pressurized by the refrigerant fluid. The introduction of this type of device also introduces additional and undesired leak path for the refrigerant.

The present invention provides a device that can accomplish venting of any pressurized fluid including refrigerants including CO2, CFC or some other fluid without any need to be incorporated into the pressurized line. One of the benefits of the present invention is the relief valve is external of the pressurized line as described below.

### Summary of the Invention

The present invention is an igniter activated relief valve with a fluid carrying line according to claim 1.

The present invention relates to an igniter activated, pyrotechnic relief valve to cut a fluid line, the line adapted to carry pressurized fluid. The invention also relates to a system for activating the valve. The relief valve has a housing disposed about the fluid line and an igniter, when activated, initiates the opening of the line. The opening of the line can be accomplished in a number of ways within the present invention. In the preferred embodiment activation of the igniter causes a cutting element to rapidly move into and cut the line. The cutting element is initially positioned away from the pressurized line and is movable into cutting engagement with a wall of the pressurized line to create an opening in the line through which the pressurized fluid can escape. The cutting element can create an opening in a portion of the refrigerant line or remove a section of the line such as by severing the line. In one embodiment, the housing has a first body portion having a slotted opening or passageway to receive the fluid line and an internal passage into which the cutter (cutting element) is positioned away from the line. The housing has one or more venting passages to expel refrigerant fluid after the line is severed. Preferably, the housing has the igniter attached to or stored in the first body portion above the cutter. In one embodiment the housing has a second body portion with a chamber for receiving the cutter and severed line after the line has been cut.

The first and second body portions (also referred to as housing portions) can be separate pieces removably attached to one another allowing attachment of the first body portion slotted opening over the pressurized fluid line prior to attaching the second body portion over the line and securing the body portions together. The igniter can be an electrically activated pyrotechnic device and include a quantity of propellant. The igniter can be connected to a crash detection system which activates the igniter upon receipt of a crash signal. The crash detection system can be a separate system but the most cost efficient approach is to make the crash detection system part of an airbag deployment system and the same signal initiating the airbag deployment activates the igniter.

The cutting element is positioned at or adjacent to the igniter and spaced from the pressurized line. The cutting element has a first end having a cutting edge initially spaced from the pressurized line and an opposite second end operatively positioned near the igniter. The cutting edge can be of virtually any shape including a large diameter circle, an oval, a rectangle, a narrow diameter circle. Preferably, the housing is positioned exterior to a passenger compartment; a preferred location is in the engine compartment. Once the housing/body portions are connected to each other the housing is secured to the tube or line. However, an optional mounting bracket can be used to mount the housing to an adjacent part in the engine compartment or elsewhere in the vehicle. An example of another way of opening the valve is the initiator/gas generator can be configured to generate a shock wave to break open the line. The shock wave in this embodiment directly fractures a portion of the line permitting refrigerant to escape. An advantage of the present invention is the design simply clamps over line so it can be taken off for service and replaced without actually interfering with the contents of the refrigerant line. When prior art devices are removed from the refrigerant line for service the A/C system would require a recharge.

### Brief Description of the Drawings

The invention will be described by way of example and with reference to the accompanying drawings in which:
FIG. 1 is a perspective view of the relief valve device of the present invention shown positioned on a section of a high pressure fluid line.
FIG. 2 is an exploded view of the device shown in figure 1 showing the major components of the invention.

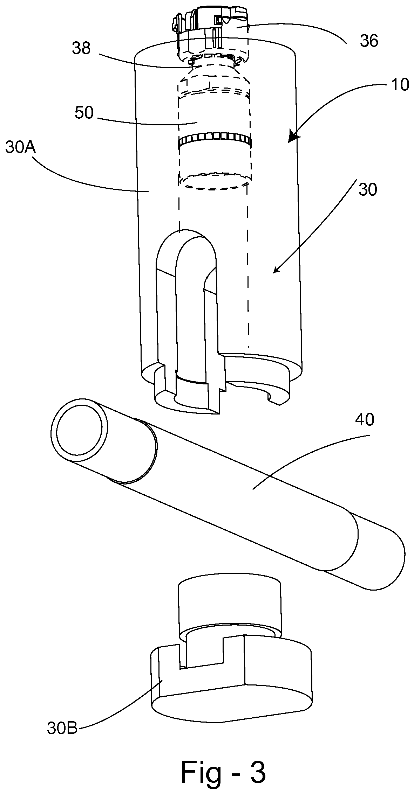

FIG. 3 is a second exploded view showing the relationship of the electrical connector, igniter and cutting element assembled in the valve.
FIG. 4 is a perspective view of the cutting element.
Fig 4A is a cross-sectional view of the cutting element.
Fig. 4B is an end view showing the cutting edge of a cutting element.
FIG. 4C shows a piston.
FIG. 4D shows another variant of a piston.
FIG. 5 is a plan side view of the relief valve device and section of pressure line taken from figure 1.
FIG. 5A is a first cross-section of the relief valve device taken along lines A-A of figure 5.
FIG. 6 is a second cross-sectional view similar to the view of figure 5A, but after activation of the igniter showing the cutting element sheared the line and moved to the bottom portion of the housing.
FIG. 7 is an exemplary vehicle cooling system showing an exemplary placement of the invention in that system.
Fig. 8 shows another alternate of the present invention in which the cavity or passage in the lower housing part or portion is tapered.
Figures 9 and 9A show a valve with a one-piece body or housing.
Figures 10, 10A and 10B show a further embodiment of the invention.

### Detailed Description of the Invention

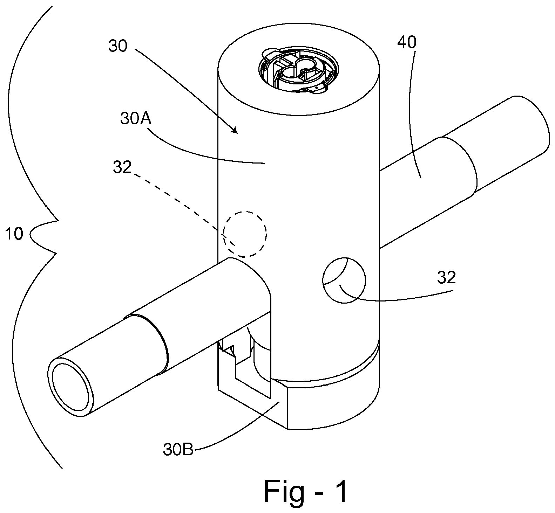

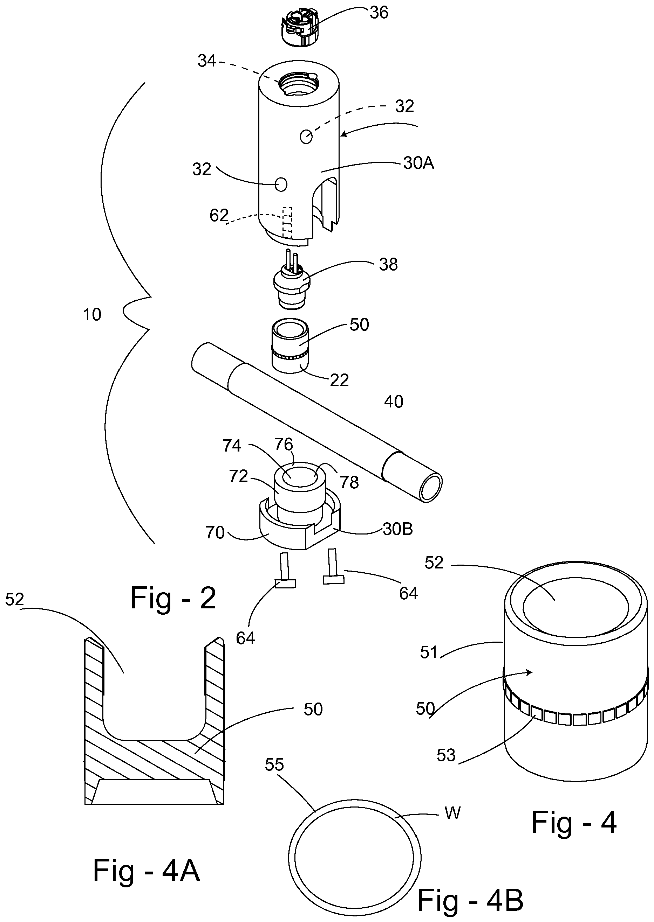

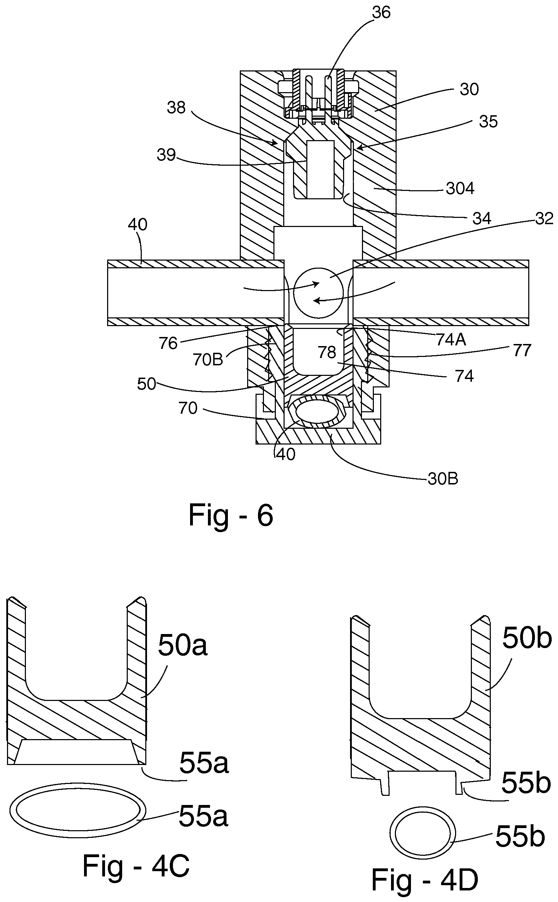

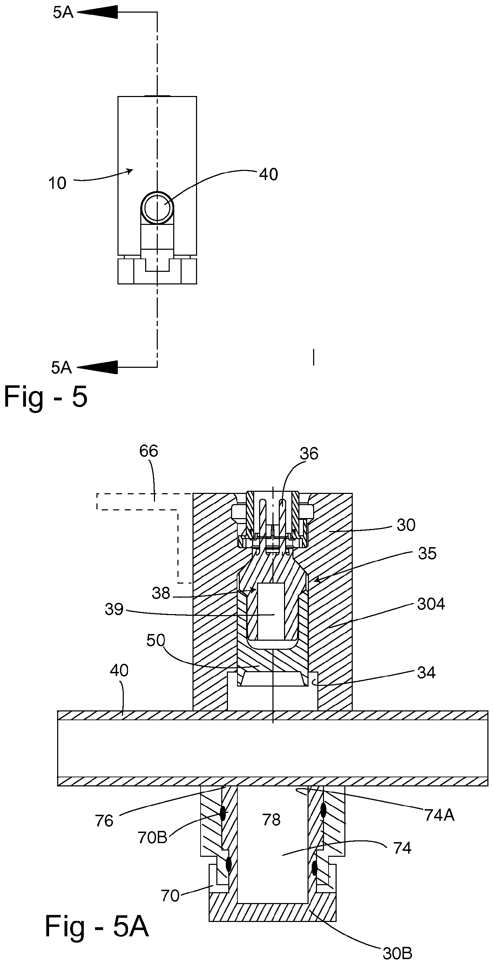

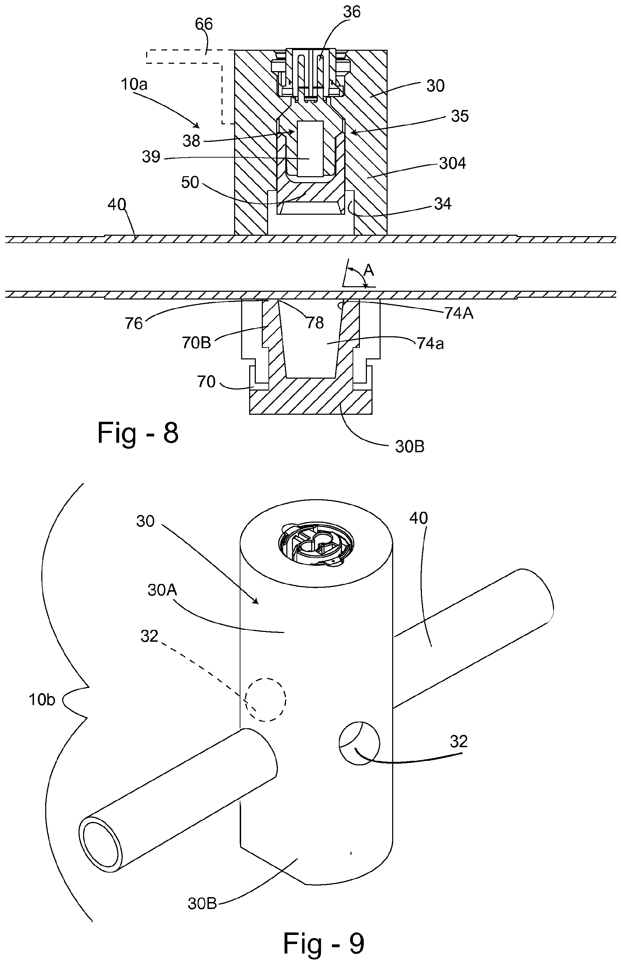

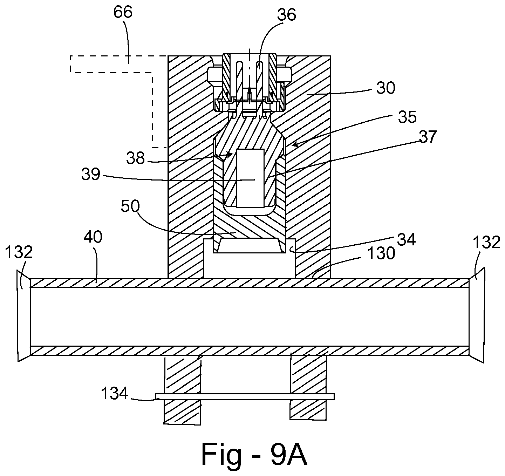

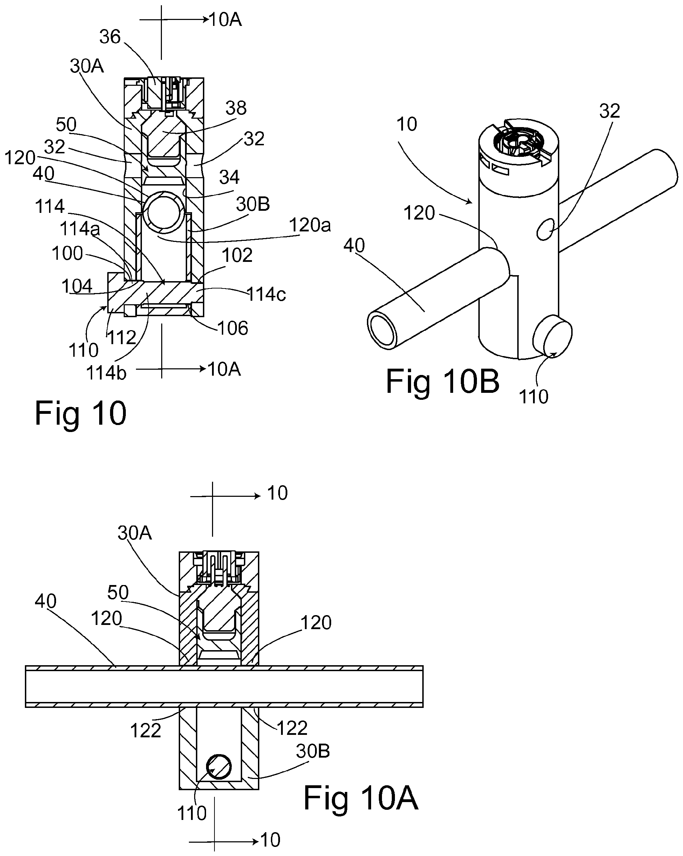

Figures 1 and 2 show the major components of a relief valve 10 incorporating the present invention. Valve 10 includes a housing 30 which may be formed using a first housing portion 30A and a second housing portion 30B. As shown in figures 9 and 9A the housing 30 can be a one-piece housing. Housing portion 30A includes a plurality of openings or vents 32 and a stepped internal bore 34 (see for example figures 2 and 5A). An igniter 38 and a movable cutter or cutting element 50 can be inserted into bore 34 from its lower end. An electrical connector 36, which receives an activation signal, can be inserted into the bore 34 from its top end. The vent holes are arranged so the exit flow of gas is thrust neutral. The second or lower housing portion 30B includes a lower flange or bottom 70 and a tubular portion 72 extending axially outward from the flange 70. The tubular portion is hollow forming a lower cavity 74 therein. The top 76 of the tubular portion is flat and can be used to support the tube 40. The walls of the cavity are shown as 78. In these figures the valve 10 is shown placed about a section of fluid carrying line. In the context of an air conditioning system, the fluid carrying line is a pressurized refrigerant line 40. Line 40 is often formed of aluminum or copper or other strong flexible material. In a preferred embodiment, the housing portions 30A and 30B are configured to connect together and when linked together provide a clamp on the outside of the line 40. Typically the valve 10 is tightly clamped upon the line 40 so the valve 10 cannot rotate and vibration is minimized. The housing portions can be welded together, see weldment 65, as shown in figure 5A. If both housing portions are provided with threads as shown in figure 6, the housing portions 30A and 30B can be threaded together. Also, as another option, housing portion 30A may include bores 60 with threads 62 (only one of each is shown); housing portion 30B includes bores (not shown) to receive threaded fasteners 64. This fastening option is shown in figure 2. The housing portions can be secured by a pin as shown in figure 10. Any combination of these ways to connect the parts are within the spirit of the invention. Other connection methods can be used as well.

When working with a high pressure system structurally weak parts and parts that create leaks are of concern. In contrast the housing of the present invention is clamped or closely fits over the line 4 and beneficially does not create any added refrigerant leak paths compared to the prior art. In addition, the present invention does not use a burst disk as found in the prior art.

Electrical connector 36 and igniter 38 can be of the same construction and design as those used in gas generators, inflators for airbags or pretensioners for seatbelts. For example, igniter 38 may include a bridge wire and quantity of propellant 39 shown diagrammatically in figure 5A. In this design the cutter element has a cylindrical body 51with an upper bore 52. As can be seen in figure 5A a narrowed portion 37 of igniter 38 fits within bore 52. When the igniter ignites, the products of combustion are momentarily trapped in bore 52 propelling the cutter element (which acts as a piston) down into tube 40. Cutter element 50 includes a series of knurled surfaces 53 along its circumference perpendicular to the axis of the cutter element, to hold the piston against bore 34 in a static within the housing prior to ignition. The surfaces 53 do not have to extend completely about the circumference and only a few selectively placed surfaces/protections are needed to hold the piston in place. The diameter of the body 51 is substantially the same as the tube 40 enabling the cutting element 50 to sever the tube 40 into two pieces. Figure 4B shows the cutting edge 55 which in the preferred embodiment is annular in shape; the width W of the cutting edge 55 is sufficiently narrow to achieve a clean cut through tube 40. The cutting element 50 can be cold headed or machined. The cutting edge can be many shapes such as being formed to a sharp point or serrated, etc. Figures 4C and 4D show other shapes of the cutter, piston or cutting element. In figure 4C the cutting edge 55a of cutting element 50a is oval in shape. The oval cutting edge 55a will be able to drive through the top and bottom of tube 40 but may not sever the tube into two pieces. As pressurized fluid or gas exists the cut tube 40 the fluid flow may assist in severing a partially cut tube. Figure 4D shows another cutting element 50b with cutting edge 55b formed as a narrow cylinder. The cutting edge 55b may only sever the top surface of tube 40.

As mentioned tube 40 may be aluminum. To avoid material reactivity or corrosion issues due to the use of dissimilar material, housing 30 of valve 10 is to be made of the same or similar material used in tube 40. In the preferred embodiment housing 30 is also aluminum. The housing 30 can be plastic as this choice will not react with the tube material. If the housing 30 must be made of a metal that could over time react with the material of the tube 40, these effects could be reduced by including a gasket between the housing 30 and the tube 40. This gasket can be for example plastic, a composite fabric or paper.

One of the key features of this invention is it is not invasive nor intrusive to the A/C system. It is serviceable; it can be unclamped from the A/C line and repaired or replaced. As with many igniters used with airbags and seatbelts the present igniter 40 can be monitored using a monitoring pulse which can check the integrity of the electrical circuit and initiate a warning indicator in the car should the valve 10 become defective and non-functional.

During assembly of the valve 10 described above, the two housing pieces 30A and 30B are brought together. As the two housing portions are attached together they apply clamping force to the tube, refrigeration line 40. The level of clamping force will vary with application and location of the valve in the vehicle. As mentioned, a benefit of clamping valve 10 to the line 40 is to reduce vibration and noise and to keep the valve 10 from rotating on the line. Valve body 30 may also include an optional bracket 66, shown in phantom line in figure 5A. Preferably, valve 10 is oriented to prevent water from engaging with the electrical connector 36, preventing any water or sediment from getting into the igniter area and obstructing the function of the igniter 38. For example, if the electrical connection pointed downward it would allow water to drip away from the igniter 38 and never solidify in the event of freezing temperatures, etc. An optional cover could be placed above the connector 36 with electrical wires extending therethrough to further isolate the connector from the local environment.

The cutting element 20 can be aluminum to prevent a reaction with the housing 30 which is also aluminum. The cutting element can be made from any material sufficiently strong to sever or cut the tube. Each of the parts of the valve must go through 700 hours of salt mist exposure as part of a qualification so it is important there are no reactive features.

The chamber 74 is intended to catch the piston or cutting element 50, but the upper edge 76 of the post or tubular portion 70 in this concept contacts tube 40. When the piston or cutting element 20 is moved after the igniter is fired, it will shear off and push a piece of line 40 down inside the chamber or cavity 74 and the severed portion of the tube will be trapped within a cavity at the lower end of the cutting element 20. The cutting edge of the cutting element 50 in the preferred embodiment as mentioned is planar, however, the edge can be formed with a convex upward surface.

The igniter 38 can have a plastic body. The top 76 of portion 70 of housing portion 30B provides a shear surface or anvil to make the cutter element more effective in shearing through the line 40. Also with surface 76 pressing upon the tube or line 40, if the igniter is designed to generate a shock wave, this support assists in fracturing the tube 40. If the line 40 moves as the cutting element descends, energy is lost and the cutter is less effective. With the line or tube 40 securely held, this allows the smallest amount of igniter energy or propellant to be used.

Reference is briefly made to figure 8 which shows a cross-sectional view similar to that shown in figure 5A. The valve 10a is substantially identical to valve 10 with the exception that the cavity 74a in the lower body or housing portion 30b is tapered with a larger diameter at the top of housing portion 30B and a smaller diameter toward the bottom of housing portion 30B. Upon activation of the igniter and acceleration of the cutter member 50, tube 40 is cut. Upon contact with the tapered walled cavity 74a the motion of the cutter element 50 is slowed. Depending upon the angle A of the taper, the cutter element will be able to cut completely through the tube 40 or be stopped prior to cutting a lower part of the tube 40, which latter possibility does not form part of the present invention.

In another option or alternative embodiment, valve 10b has a one-piece housing 30 having placed therein the connector, igniter and cutter element. The housing 30 is positioned around a length of the tube 40 . This configuration is first shown in figure 9. In this embodiment a valve 10b and length of high pressure line 40 can be supplied to the persons or company responsible for installing the A/C system into the vehicle. Figure 9A shows a cross-sectional view of valve 10b. Housing 30 includes a bore 130 which runs perpendicular to the longitudinal axis of the valve. After a section of tube 40 is inserted within the bore 130 of housing 30 of valve 10b the ends of the tube can be formed into a pressure fitting 132 allowing this section of line or tube 40 to be connected to other elements of the airbag system. No additional leak paths are created in this embodiment as this section of tube would have the same fittings as if valve 10 or 10a were used to be connected to another part of the A/C system. Valve 10b can also include a bracket 66 to secure valve 10b to an adjacent portion of the vehicle. An optional pin 134 can be used as a block to the motion of cutter 50.

Figures 10, 10A and 10B show another embodiment of the invention in which various housing parts are pinned together. Figures 10 and 10A are cross-sectional views while figure 10B is an orthogonal view. As before the lower housing portion 30B is received in the stepped bore 34 in housing portion 30A. Housing portion 30A has a set of opposing openings 100, 102 with opening 100 larger than 102. Housing portion 30B has a similar set of opposed openings 104 and 106 with opening 104 larger than 106. Opening 100 and 104 are about the same size. Upon assembly of the housing portions the sets of openings are aligned and pin 110 is inserted therein. Pin 110 has a wide head 112 and shaft 114; shaft 114 has a varying diameter. The shaft has a widest diameter portion 114a, a middle sized diameter portion 114b and a narrow diameter portion 114c. The widest diameter portion 114a is press fit to both housing portions, the narrow diameter portion 114c is press fit only to housing portion 30A. The middle diameter portion does not engage either housing portion 30A or 30B. Once the pin 110 is inserted through the aligned holes the housing portions are joined together. With regard to each of the embodiments discussed above, when the various housing portions are joined together they secure the tube 40 therebetween and prevent the various parts of the valve from vibrating, rattling relative to each other and to the tube and also prevent the valve from rotating about the tube. In figures 10A and 10B the tube 40 is inserted in a curved surface 120 in housing portion 30a and a curved surface 120a in housing portion 40B.

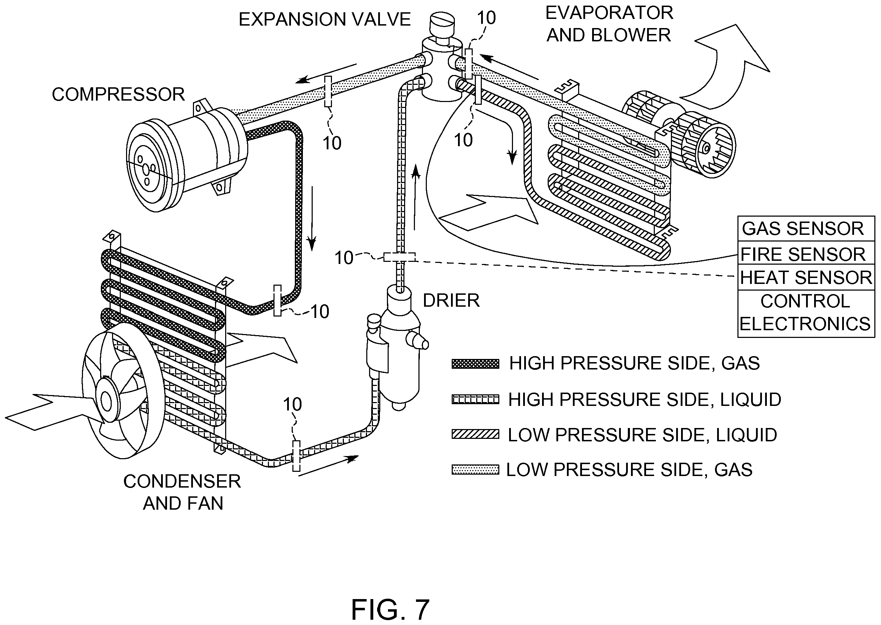

Figure 7 shows the basic components of a vehicle air conditioning system. The preferred placement of any of the valves 10, 10a or 10b is in the low pressure liquid line between the expansion valve and evaporator. The valves of the present invention can be placed at virtually any location of an A/C system and these other mounting locations are shown using numeral 10 and a phantom lead line. During a crash any of the valves at the alternate location can be activated to vent the refrigerant into the engine compartment thereby preventing the refrigerant from entering the passenger compartment. Consider an alternate use of the invention, one that can be achieved using any of the valves preferably placed in the high or low pressure gas lines of the A/C system. The valve can also be placed in the liquid carrying lines as well. In the primary embodiment of the invention the purpose of the invention is to vent carbon dioxide away from the passenger compartment. In operation, a crash of the vehicle and be sensed by a crash sensor such as the type used in airbag safety systems already included in most vehicles. The valve 10 to vent the air conditioning fluid would also be activated if the refrigerant is leaking into the passenger compartment or if other variables indicate this could occur. For example, the system can include a CO2 sensor in the passenger compartment and if the concentration of CO2 is increasing to an undesired level in combination with a crash, the valve 10 is activated. Alternately, a pressure sensor can be installed to sense line pressure in the A/C system. If the vehicle is involved in a crash as sensed by the crash sensor and if the pressure in the line is lowered it may also be desirable to activate the valve to increase the rate at which refrigerant is vented.

Figure 7 shows the control system can also use a fire sensor (or heat sensor) which can be included in the engine compartment. If there were a fire in the engine compartment, and if any of valves 10, 10a and 10b were energized the carbon dioxide would expand into the engine compartment and help quench a fire. Here the valves can be used as the primary fire extinguishing mechanism or secondary fire extinguishing mechanism. As a secondary fire extinguishing mechanism the valves 10, 10a or 10b and carbon dioxide would assist the primary fire extinguishing system in which case the valve would be active in concert with the activation of the primary fire extinguishing system. Alternately, the valve could be energized at a later time if the fire previously thought to be extinguished by the primary system reignites.

While certain representative embodiments and details have been shown for the purpose of illustrating the invention, it will be apparent to those skilled in this art that various changes and modifications can be made therein without departing from the scope of the invention. It is, therefore, to be understood that changes can be made in the particular embodiments described which will be within the scope of the invention as defined by the following appended claims.

## Claims

1. An igniter activated relief valve (10) with a fluid carrying line including a pressurized fluid line (40), the relief valve (10) being adapted to cut the fluid carrying line and comprising:
a housing (30) disposed about the fluid line, the housing has a first body portion (30A) having a slotted opening or passageway to receive the pressurized fluid line (40);
an igniter (38) when activated causes the line to open, the igniter (38) attached to or stored in the first body portion (30A) ;
a cutting element (50) initially positioned at or proximate to the igniter (38) and initially spaced from the pressurized line (40) and movable into cutting engagement with a wall of the pressurized line (40) to create an opening in the line through which the pressurized fluid can escape; and
wherein the igniter (38) when activated propels the cutting element (50) into the line, said cutting element (50) has a cutting body (51) having a diameter substantially the same as the line (40) to sever the line (40) into two pieces, and said cutting element (50) is configured to pierce an adjacent surface of the line tube (40) and an opposite surface of the line tube (40), and wherein the housing (30) has a second body portion (30B) with a chamber (74) for receiving the cutter (50) when moved by activation of the igniter (38) whereby the severed portion of the tube is trapped within a cavity at the lower end of the cutting element (50) in said chamber (74).

2. The relief valve of claim 1 wherein the igniter (38) generates a shock wave to open the line, wherein preferably the shock wave fractures a portion of the line to open the line.

3. The relief valve of claim 1 wherein the housing (30) has one or more venting passages (32) to expel fluid from the housing.

4. The relief valve of claim 1 wherein the first and second body portions (30A, 30B) are separate pieces removably attached to the other allowing attachment of the first body portion slotted opening over the pressurized fluid line (40) prior to attaching the second body portion (30B) to the first body portion (30A) to position the housing (30) on the line (40).

5. The relief valve of claim 1 wherein the igniter (38) is a pyrotechnic device able to be electrically connected to a crash detection system which activates the igniter (38) on a signal, preferably said crash detection system is part of an airbag deployment system and the same signal initiating the airbag deployment activates the igniter.

6. The relief valve of claim 1 wherein the igniter (38) has a cylindrical propellant charged squib.

7. The relief valve of claim 1 wherein the cutting element (50) has a first end having a cutting edge (55) and an opposite second end positioned near or aligned with and spaced from the igniter (38).

8. The relief valve according to claim 1 wherein the cutting element (50) has a cutting edge (55) wherein the cutting edge is shaped as a circle, an oval, or a narrow diameter circle.

9. A system comprising the relief valve of claim 1 in combination with a length of tube (40) already fitted to the relief valve (10).

10. The system according to claim 9 wherein the housing (30) of the relief valve (10) is a one-piece housing with the tube (40) inserted through a passage in the housing.

11. The system according to claim 9 wherein the pressurized line (40) contains a pressurized refrigerant; the system preferably including a variety of sensors to sense an emergency requiring the activation of the valve (10).

## Patentansprüche

1. Zündvorrichtungs-Entlastungsventil (10) mit einer Fluid führenden Leitung, enthaltend eine mit Druck beaufschlagte Fluidleitung (40), wobei das Entlastungsventil (10) geeignet ist, die Fluid führende Leitung zu trennen, und Folgendes beinhaltet:
ein Gehäuse (30), welches um die Fluidleitung angeordnet ist, wobei das Gehäuse einen ersten Körperabschnitt (30A) besitzt, welcher eine geschlitzte Öffnung oder einen Durchgang besitzt, um die mit Druck beaufschlagte Fluidleitung (40) aufzunehmen;
eine Zündvorrichtung (38), welche, wenn sie aktiviert wird, die Leitung zum Öffnen veranlasst, wobei die Zündvorrichtung (38) an dem ersten Körperabschnitt (30A) befestigt oder darin gelagert ist;
ein Schneidelement (50), welches ursprünglich an dem oder unmittelbar in der Nähe der Zündvorrichtung (38) positioniert und ursprünglich von der mit Druck beaufschlagten Leitung (40) entfernt und in Schneideingriff mit einer Wand der mit Druck beaufschlagten Leitung (40) beweglich ist, um eine Öffnung in der Leitung zu schaffen, durch welche das mit Druck beaufschlagte Fluid entweichen kann; und
wobei die Zündvorrichtung (38), wenn sie aktiviert wird, das Schneidelement (50) in die Leitung vortreibt, wobei das Schneidelement (50) einen Schneidkörper (51) besitzt, welcher einen Durchmesser besitzt, welcher im Wesentlichen der gleiche ist wie derjenige der Leitung (40), um die Leitung (40) in zwei Teile zu trennen, und wobei das Schneidelement (50) konfiguriert ist, um eine angrenzende Oberfläche des Leitungsrohrs (40) und eine gegenüberliegende Oberfläche des Leitungsrohrs (40) zu durchstechen, und wobei das Gehäuse (30) einen zweiten Körperabschnitt (30B) mit einer Kammer (74) zum Aufnehmen des Schneiders (50) besitzt, wenn dieser durch Aktivierung der Zündvorrichtung (38) bewegt wird, wodurch der abgetrennte Abschnitt des Rohrs innerhalb eines Hohlraums am unteren Ende des Schneidelementes (50) in der Kammer (74) gefangen wird.

2. Entlastungsventil nach Anspruch 1, bei welchem die Zündvorrichtung (38) eine Schockwelle erzeugt, um die Leitung zu öffnen, wobei vorzugsweise die Schockwelle einen Abschnitt der Leitung zum Öffnen der Leitung frakturiert.

3. Entlastungsventil nach Anspruch 1, bei welchem das Gehäuse (30) einen oder mehrere Entlüftungsdurchgänge (32) zum Ausstoßen von Fluid aus dem Gehäuse besitzt.

4. Entlastungsventil nach Anspruch 1, bei welchem der erste und der zweite Körperabschnitt (30A, 30B) separate Teile sind, welche abnehmbar aneinander befestigt sind, wodurch das Befestigen der geschlitzten Öffnung des ersten Körperabschnittes über der mit Druck beaufschlagten Fluidleitung (40) vor dem Befestigen des zweiten Körperabschnittes (30B) am ersten Körperabschnitt (30A) zum Positionieren des Gehäuses (30) an der Leitung (40) ermöglicht wird.

5. Entlastungsventil nach Anspruch 1, bei welchem die Zündvorrichtung (38) eine pyrotechnische Vorrichtung ist, welche in der Lage ist, elektrisch mit einem Crash-Detektionssystem verbunden zu werden, welches die Zündvorrichtung (38) auf ein Signal aktiviert, wobei vorzugsweise das Crash-Detektionssystem Teil eines Airbag-Entfaltungssystems ist und das gleiche Signal, welches die Airbag-Entfaltung initiiert, die Zündvorrichtung aktiviert.

6. Entlastungsventil nach Anspruch 1, bei welchem die Zündvorrichtung (38) einen zylindrischen Zünder besitzt, welcher mit Treibmittel geladen ist.

7. Entlastungsventil nach Anspruch 1, bei welchem das Schneidelement (50) ein erstes Ende besitzt, welches eine Schneidkante (55) und ein gegenüberliegendes zweites Ende besitzt, welches in der Nähe von oder ausgefluchtet mit und von der Zündvorrichtung (38) entfernt positioniert ist.

8. Entlastungsventil nach Anspruch 1, bei welchem das Schneidelement (50) eine Schneidkante (55) besitzt, wobei die Schneidkante als ein Kreis, ein Oval oder ein Kreis mit schmalem Durchmesser geformt ist.

9. System, beinhaltend das Entlastungsventil nach Anspruch 1 in Kombination mit einer Rohrlänge (40), welche bereits an dem Entlastungsventil (10) angebracht ist.

10. System nach Anspruch 9, bei welchem das Gehäuse (30) des Entlastungsventils (10) ein einstückiges Gehäuse ist, wobei das Rohr (40) durch einen Durchgang in dem Gehäuse eingelegt ist.

11. System nach Anspruch 9, bei welchem die mit Druck beaufschlagte Leitung (40) ein mit Druck beaufschlagtes Kältemittel enthält; wobei das System vorzugsweise eine Vielfalt von Sensoren zum Erkennen eines Notfalls enthält, welcher die Aktivierung des Ventils (10) erfordert.

## Revendications

1. Soupape de détente activée par allumeur (10) comportant une conduite transportant un fluide incluant une conduite de fluide sous pression (40), la soupape de détente (10) étant adaptée pour couper la conduite de transport de fluide et comprenant :
un logement (30) disposé autour de la conduite de fluide, le logement comprenant une première partie de corps (30A) ayant une ouverture fendue ou un passage pour recevoir la conduite de fluide sous pression (40);
un allumeur (38) qui, lorsqu'il est activé, provoque l'ouverture de la conduite, l'allumeur (38) étant fixé à ou conservé dans la première partie de corps (30A);
un élément de coupe (50) positionné initialement contre ou à proximité de l'allumeur (38) et espacé initialement de la conduite sous pression (40) et mobile dans un engagement coupant sur une paroi de la conduite sous pression (40) pour créer une ouverture dans la conduite à travers laquelle le fluide sous pression peut s'échapper; et
dans laquelle l'allumeur (38), lorsqu'il est activé, propulse l'élément de coupe (50) dans la conduite, ledit élément de coupe (50) a un corps de coupe (51) ayant un diamètre sensiblement égal à la conduite (40) pour sectionner la conduite (40) en deux parties, et ledit élément de coupe (50) est configuré pour transpercer une surface adjacente du tube de conduite (40) et une surface opposée du tube de conduite (40), et dans laquelle le logement (30) possède une seconde partie de corps (30B) comportant une chambre (74) pour recevoir le trancheur (50) lorsqu'il est déplacé par une activation de l'allumeur (38), au moyen de quoi la partie sectionnée du tube est enfermée à l'intérieur d'une cavité à l'extrémité inférieure de l'élément de coupe (50) dans ladite chambre (74).

2. Soupape de détente selon la revendication 1, dans laquelle l'allumeur (38) produit une onde de choc pour ouvrir la conduite, dans laquelle de préférence l'onde de choc fracture une partie de la conduite pour ouvrir la conduite.

3. Soupape de détente selon la revendication 1, dans laquelle le logement (30) comprend un ou plusieurs conduits de purge (32) pour évacuer le fluide du logement.

4. Soupape de détente selon la revendication 1, dans laquelle les première et seconde parties de corps (30A, 30B) sont des pièces séparées fixées de façon amovible l'une à l'autre pour permettre la fixation de l'ouverture fendue de la première partie de corps au-dessus de la conduite de fluide sous pression (40) avant de fixer la seconde partie de corps (30B) à la première partie de corps (30A) pour positionner le logement (30) sur la conduite (40).

5. Soupape de détente selon la revendication 1, dans laquelle l'allumeur (38) est un dispositif pyrotechnique pouvant être électriquement connecté à un système de détection de collision qui active l'allumeur (38) sous l'effet d'un signal, et de préférence ledit système de détection de collision fait partie d'un système de déploiement d'airbag et le même signal amorçant le déploiement d'un airbag active l'allumeur.

6. Soupape de détente selon la revendication 1, dans laquelle l'allumeur (68) comporte un détonateur à charge propulsive.

7. Soupape de détente selon la revendication 1, dans laquelle l'élément de coupe (50) a une première extrémité ayant un bord coupant (55) et une seconde extrémité opposée positionnée à côté de ou alignée avec et espacée de l'allumeur (38).

8. Soupape de détente selon la revendication 1, dans laquelle l'élément de coupe (50) a un bord coupant (55), le bord coupant ayant une forme de cercle, une forme ovale ou une forme de cercle de diamètre étroit.

9. Système comprenant la soupape de détente selon la revendication 1 en combinaison avec une longueur de tube (40) déjà montée sur la soupape de détente (10).

10. Système selon la revendication 9, dans lequel le logement (30) de la soupape de détente (10) est un logement formé d'une seule pièce avec le tube (40) inséré à travers un passage dans le logement.

11. Système selon la revendication 9, dans lequel la conduite sous pression (40) contient un agent frigorigène sous pression, le système incluant de préférence divers capteurs pour détecter un état d'urgence nécessitant l'activation de la soupape (10).
